# EUROPÄISCHE PATENTSCHRIFT

(11) **EP 0 479 990 B1**
(45) Veröffentlichungstag und Bekanntmachung des Hinweises auf die Patenterteilung: **27.12.1996**
(21) Anmeldenummer: 91907806.3
(22) Anmeldetag: 30.04.1991
(51) Int. Cl.: G09B 3/02, A63F 9/18

(54) **1 X 1 - LERNSPIEL**
GAME FOR LEARNING MULTIPLICATION TABLES
JEU EDUCATIF PERMETTANT D'APPRENDRE LES TABLES DE MULTIPLICATION

(30) Priorität: 30.04.1990 DE 4013932
(43) Veröffentlichungstag der Anmeldung: 15.04.1992
(73) Patentinhaber: Kroeber, Lutz, D-80805 München (DE)
(72) Erfinder: Kroeber, Lutz, D-80805 München (DE)
(86) Internationale Anmeldenummer: DE9100362
(87) Internationale Veröffentlichungsnummer: WO9117534

(56) Entgegenhaltungen:
- FR-A- 384 991
- GB-A- 331 255
- US-A- 2 054 309

## Beschreibung

Für auswendig zu lernende Frage-Antwort-Komplexe, insbesondere, wenn jede Frage aus zwei verknüpften Teilen besteht oder sich in solche zerlegen läßt, bieten sich Sätze von Objekten an, wie eines US-A-2 054 309 beschreibt. Man kann damit schön augenfällig fortschreitend "Durchgänge" machen, die Einzelstücke wandern von einem "Topf" in einen zweiten.

Selten bedingen sich Idee und fertigungstechnische Ausformung so wie hier, und zwar nicht nur, weil das Produkt nicht zu teuer werden darf.

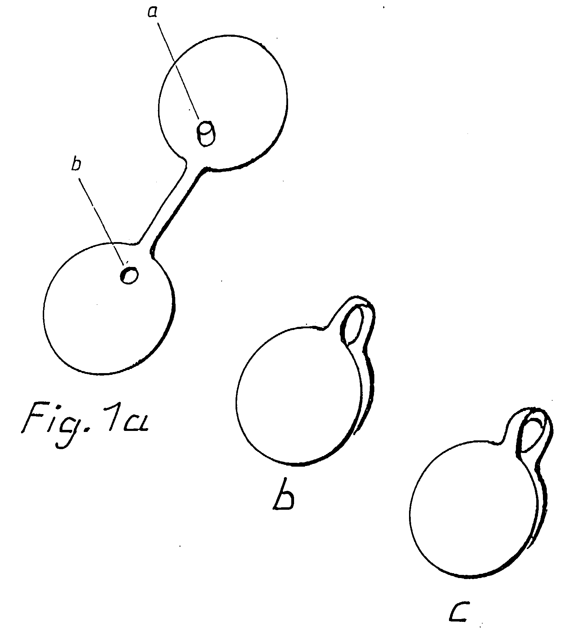

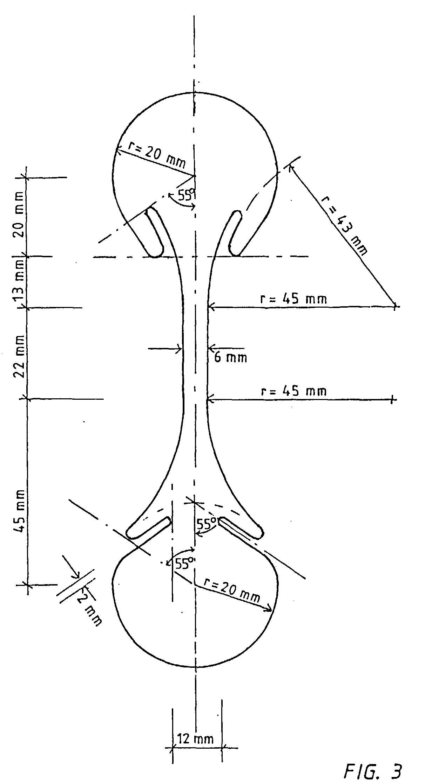

Es stellt sich die Frage des Bedruckens noch vor oder mit der Frage des Verschlusses, denn die Möglichkeiten der Drucktechnik bedingen sowohl das Herstellungsverfahren als auch letztlich die Art des Verschlusses. Für das Produkt bietet sich Kunststoff als der wohl einzig akzeptable Werkstoff an. Als Spritzteile könnten Stücke gem. Figur 1 gestaltet sein, Figuren also etwa der Art, wie sie schon FR-A-384 991 (die eine Echtheitsetikette für Flaschen offenbart) mit dortiger Fig. 3 vorschlägt. Solche Spritzteile mit Zapfen könnten aber wegen ihrer Form nicht bedruckt werden, sondern müßten einzeln verschieden beispielsweise beklebt werden, was viel zu teuer käme; und die verschiedenen Informationen etwa zu prägen, erforderte für jedes Teiltypus eine eigene Werkzeugform - ein unnötiger Aufwand. Besser ist es, die Teile aus Platten bzw. Folien zu stanzen, denn dünne Kunststoffplatten lassen sich bedrucken. Jetzt muß sich aber die Verschlußgestaltung auf zwei Dimensionen beschränken. Auch FR-A-384 991 zeigt mit Fig. 1 eine nur zweidimensionale Gestaltung. Der dortige Anwendungszweck erfordert jedoch lediglich ein Zuklappen, und es genügt dafür der dort gezeigt Steckverschluß. Hier nun soll jedoch auch ein gewendetes Schließen möglich sein, wobei auch dabei die beiden Hälften plan aufeinander anliegen.

Dies wird durch die Merkmale des Anspruchs 1 erreicht.

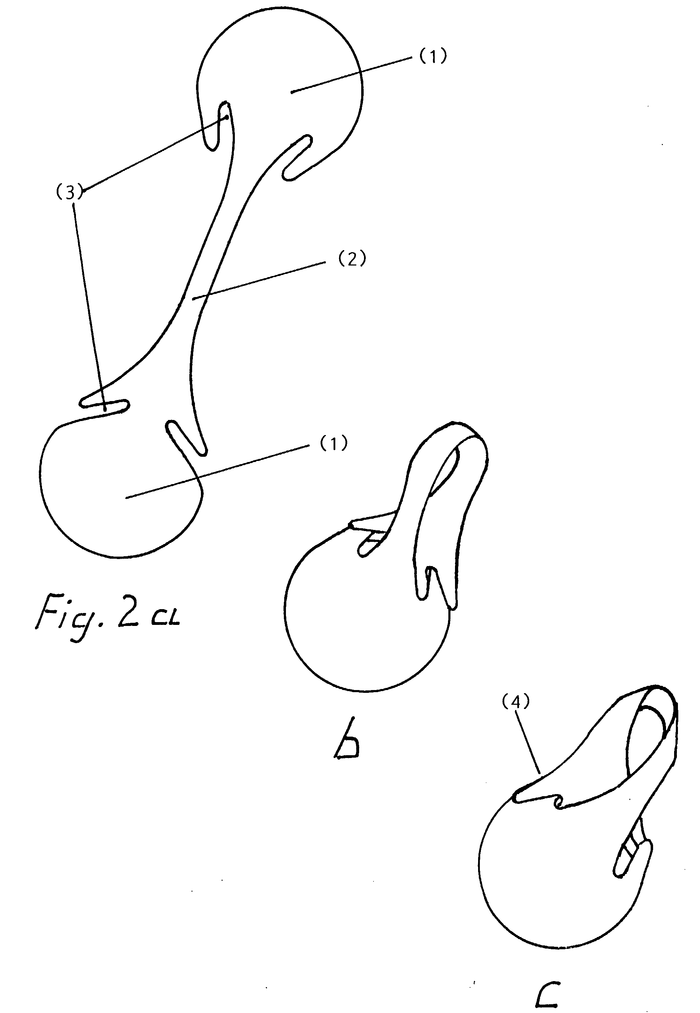

Ausführungsbeispiele der Erfindung werden im folgenden anhand der Figuren 2 und 3 erläutert. Die Fig. 1 zeigt eine Ausführungsform, die vom Schutzbereich der Ansprüche nicht umfaßt wird.

Fig. 2a zeigt die zweidimensionale Formgebung eines verschließbaren (Fig. 2b) Teiles, dessen Gestalt auch das gewendete Verschließen (Fig. 2c) gewährleistet, um im Falle eines 1X1-Lernspiels auch Divisionsaufgaben entstehen zu lassen. Fig. 3 ist die Maßzeichnung für ein Stanzwerkzeug.

Zu beachten ist, daß der Stärkeverlauf des Steges und die Materialsteifigkeit aufeinander abgestimmt sein müssen, so daß die Verschränkung nach Fig. 2b bei hantieren und werfen stabil bleibt, und das Einhaken nach Fig. 2c die beiden Hälften zur Deckung bringt. Das Material muß zum einen elastisch sein und sich nicht etwa knicken und zum zweiten sich eben auch bedrucken lassen. Es eignet sich hierfür Nylon, also PA.

## Patentansprüche

1. Frage-Antwort-Lernspiel mit einem vornehmlich platten Gegenstand, der nach dem Prinzip Schließen- Öffnen betätigt wird, **dadurch gekennzeichnet**, daß der Mittelpunktsabstand zweier Scheiben (1) etwa das Fünffache und die Breite eines diese verbindenden Steges (2) ein Viertel bis ein Drittel ihrer Radien mißt, und die Scheiben (1) mit den Informationen in Kehlen in den Steg übergehen, in welchen Bereichen einander hüben wie drüben korrespondierende Einschnitte (3) einen Schränkverschluß ergeben.

2. Lernspiel nach Anspruch 1, **dadurch gekennzeichnet**, daß der Schränkverschluß auch ein gewendetes Schließen durch einhaken (4) ermöglicht.

## Claims

1. A question-and-answer educational game with a largely two-dimensional object which functions according to the open-close principle which is characterized by the fact that the distance between the central points of two discs (1) is approx. five times that of their radii and that the width of the connecting crosspiece (2) is approx. one quarter of the radii. Furthermore, the discs (1), with the information in grooves, flow into the crosspieces at a point where both ends have corresponding slots (3) which interlace to create an interlacing clasp.

2. An educational game as explained in claim 1, characterized by the fact that the interlacing clasp can also be closed by being hooked up (4) when inverted.

## Revendications

1. Jeu éducatif question-réponse avec un objet particulièrement plat, actionné selon le principe fermeture-ouverture,
caractérisé en ce que
l'écart des centres de deux disques (1) mesure environ le quintuple et la largeur d'une barrette (2) reliant ceux-ci mesure un quart à un tiers de leurs rayons, et en ce que les disques (1), passent avec les informations dans des gorges dans la barrette, dans les zones desquelles des entailles (3) situées des deux côtés et correspondant l'une à l'autre constituent un système de femeture croisée.

2. Jeu éducatif selon la revendication 1,
caractérisé en ce que
le système de fermeture croisée permet également une fermeture retournée par enclenchement (4).
